# EUROPÄISCHE PATENTSCHRIFT

(11) **EP 0 591 782 B1**
(45) Veröffentlichungstag und Bekanntmachung des Hinweises auf die Patenterteilung: **10.12.1997**
(21) Anmeldenummer: 93115421.5
(22) Anmeldetag: 24.09.1993
(51) Int. Cl.: C08L 67/02, C08J 5/18

(54) **Wasserdampfdurchlässige, atmungsaktive Polyetheresterfolien sowie deren Verwendung**
Water vapour permeable, breathable polyetherester films and their use
Feuilles de polyétherester perméables à la vapeur d'eau et à l'air et leur utilisation

(30) Priorität: 07.10.1992 DE 4233654; 01.03.1993 DE 4306276
(43) Veröffentlichungstag der Anmeldung: 13.04.1994
(73) Patentinhaber: Wolff Walsrode Aktiengesellschaft, D-29655 Walsrode (DE)
(72) Erfinder: Schultze, Dirk, Dr., D-29683 Fallingbostel (DE); Hargarter, Nicole, Dipl.-Ing., D-21075 Hamburg (DE); Funk, Hans-Werner, D-29699 Bomlitz (DE)
(74) Vertreter: Braun, Rolf, Dr.

(56) Entgegenhaltungen:
- EP-A- 0 265 922
- DE-A- 2 412 591

## Beschreibung

Die Erfindung betrifft eine Copolyetheresterfolie mit einem Erweichungsbereich ≥150 C, deren kennzeichnende Merkmale darin zu sehen sind, daß sie aus mindestens einem Copolyetheresterharz und mindestens einem weiteren thermoplastischen Polyurethanharz besteht und daß die Folie bevorzugt ein Antiblockmittel und/oder ein Gleitmittel enthalten kann.

Die Erfindung betrifft eine durch Extrusion hergestellte Copolyetheresterfolie mit verbesserter Durchlässigkeit hinsichtlich Wasserdampf bei gleichzeitiger Gewährleistung der Wasserundurchlässigkeit.

Sie betrifft ferner die Verwendung solcher Folien in Laminaten, insbesondere bei der gas- und/oder flüssigkeitsundurchlässigen Abdeckung von porösen Flächengebilden

Copolyetherester und thermoplastische Polyurethane gehören zu der Stoffklasse der thermoplastischen Elastomere. Thermoplastische Elastomere sind im allgemeinen Blockcopolymere, deren makroskopische Eigenschaftsbilder sich als Kombination der Eigenschaften der einzelnen blockbildenden Komponenten ergeben. Eine breite Übersicht über diese Stoffklasse vermittelt Legge in Rubber Chemistry and Technology 62 (1989) 529-547.

Copolyetherester sind Blockcopolymere, die aus Ester- und Ethersegmenten aufgebaut sind. In dieser Gruppe werden die mechanischen Festigkeiten und hohen chemischen Beständigkeiten der Polyester mit dem flexiblen Charakter der Polyether verknüpft. Obwohl es für beide Segmenttypen eine nahezu unendliche Vielfalt möglicher unterschiedlicher molekularer Bausteine gibt, werden doch bestimmte Typen bevorzugt eingesetzt. Bei den Polyestern handelt es sich hierbei um die Ester der Terephthalsäure, im allgemeinen Ethylen- oder Butylen-Terephthalate. Bei den Ethersegmenten sind die auf Ethylen- und Propylenoxid aber auch Tetrahydrofuran basierenden Glycole beliebte Bausteine.

Die Eigenschaften der genannten Einzelkomponenten sind in der einschlägigen Literatur, beispielsweise von Petrik, Bohdanecky, Hobodas und Simek in Journal of Applied Polymer Science 42 (1991) 1759-1765 oder Radhakrishnan, Saini und Kuber in European Polymer Journal 27 (1991) 291-297, beschrieben.

Ausgehend von den genannten Molekülbausteinen sind die makroskopischen Eigenschaften nicht nur deren Abbild, sondern auch - wie bei allen teilkristallinen Polymeren - von der übermolekularen Struktur abhängig. Letztere hängt neben dem chemischen Aufbau, d.h. bei Blockcopolymeren von der Größe und Verteilung der jeweiligen Blöcke, von der thermomechanischen Vorgeschichte, besonders den Verarbeitungsbedingungen ab. Ausführliche Darstellungen der Copolyetherester und den möglichen Formen ihrer übermolekularen Strukturen sind u.a. von Adams und Hoeschele oder Wegener in Thermoplastic Elastomers, Legge, Holden und Schroeder (Hrsg.), im Hanser Verlag, München 1987, erschienen.

Die thermoplastischen Polyurethane sind ebenfalls seit langem bekannt und weisen eine hohe chemische Beständigkeit auf Ihre drei Basiskomponenten sind Diissocyanate, kurzkettige Diole - auch als Kettenverlängerer bezeichnet - und langkettige Diole, wobei letztere zu den elastischen Eigenschaften beitragen. Teilweise werden anstelle der ausschließlichen Verwendung von Diolen auch geringe Anteile von Polyolen zugesetzt, um die ansonsten linearen Molekülketten teilweise miteinander zu vernetzen. Die große Auswahl an Rohstoffen in jeder der drei genannten Eduktgruppen begründet die vielfältigen Möglichkeiten, thermoplastische Polyurethane chemisch aufzubauen und somit ihre Eigenschaften zu variieren.

Bei den handelsüblichen thermoplastischen Polyurethanen wird allgemein eine Verknüpfung guter Festigkeitswerte, d.h. Zug- und Weiterreißfestigkeit, und großer Elastizität, d.h. hohe Dehnfähigkeit und Kälteflexibilität, angestrebt. Einen Überblick über den chemischen Aufbau, die Produktion sowie die Eigenschaftsbilder und die sich daraus ergebenden Anwendungsmöglichkeiten von thermoplastischen Polyurethanen geben z.B. Goyert und Hespe in Kunststoffe 68 (1978) 819-825 oder Hepburn (Hrsg.) in Polyurethane Elastomers, Applied Science Publishers, Barking 1982.

Die Verwendung von mikroporösen Filmen als atmungsaktive aber wasserdichte Membranen, die durch Verstrecken oder durch Koagulation aus Lösung hergestellt werden, ist seit langem bekannt. Porenfreie Filme mit hoher Atmungsaktivität werden aber bevorzugt, wenn der Film oder die Folie neben der hohen Durchlässigkeit auch gute mechanische Festigkeiten aufweisen soll. Ebenso für Anwendungen im Bereich von Medizin- oder Hygiene-Anwendungen werden bevorzugt porenfreie Folien zum Einsatz gebracht, um die Kontamination mit Bakterien oder Verschmutzungen auszuschließen. Derartige nichtporöse Filme lassen sich bevorzugt durch Verarbeitung aus der Schmelze herstellen.

Die Verarbeitung zu Folien ist durch Breitschlitz- oder Blasfolienextrusion möglich, derart wie sie beispielsweise in Kirk-Othmer, Exclopedia of Chemical Technology 9 (1966) 232-241, beschrieben ist. So ist es möglich, Folien in Dicken von wenigen Micrometern, bis in den Millimeterbereich herzustellen. Die Breitschlitzextrusion bietet gegenüber der Blasfolienextrusion den Vorteil, Folien mit verbesserten Dickentoleranzen und bis zu größeren Dicken herzustellen.

Aus der einschlägigen Fachliteratur, beispielsweise Komerska, J. Plast. Film Sheeting, 3 (1987), 58-64, ist bekannt, daß bei gleichem Material die Verarbeitung aus der Schmelze zu höheren Wasserdampfdurchlässigkeiten führt, als eine Verarbeitung aus Lösung.

Es ist bekannt, daß thermoplastische, lineare Copolyetherester-Elastomere für die Verarbeitung aus der Schmelze geeignet sind. Solche Copolyetherestersysteme sind u.a. bekannt nach Shivers, US-PS 3.023.192, Witsiepe, US-PS 3.651.014 und Wolfe, US-PS 3.775.374 aber auch Nishimura et al. "Elastomers Based on Polyester", J. Macromol. Sci. (Chem.), Al 4 (1967), 617-625 oder Wolfe, "Elastomeric Polyetherester Block Copolymers", American Chemical Society Advances in Chemistry, 176 (1979) 129-151. Diese Elastomere bestehen grundsätzlich aus langkettigen Ether-Einheiten, welche das "Weich-Segment" bilden und kurzkettigen Ester-Einheiten, die das "Hart-Segment" bilden.

Es ist bekannt, daß die kurzkettigen Ester-Einheiten, die die mechanische Festigkeit kontrollierende Gerüststruktur bilden. Die in diese Gerüststruktur eingelagerte Matrix aus langkettigen Ethersegmenten mit vorzugsweise kleinen Kohlenstoff/Sauerstoffverhältnissen ermöglicht den Durchlaß von einzelnen Wassermolekülen und somit die Wasserdampfdurchlässigkeit. Insbesondere Ethersegmente mit kleinen Kohlenstoff/Sauerstoffverhälthissen zeigen starke Affinität zu Wasserdampf - wie zum Beispiel bei Petrik et al., J. Appl. Polym. Sci 42 (1991) 1759-1765 beschrieben. Die aus Ethersegmenten bestehende Matrix ist für Verbände von Wassermolekülen wie Tropfen jedoch nicht passierbar. Folien aus solchen Materialien stellen somit atmungsaktive, aber wasserdurchlässige Flächengebilde dar.

Von Samejima, japanische Patent-Publikation 51-111290, Vrouenrats et al., EP 0 111 360 B1 und Ostapchenko, EP 0 265 922 B1 sind extrudierbare wasserdampfdurchlässige und wasserdichte Copolyetherester-Zusammensetzungen beschrieben. Die von Vrouenrats et al.in der EP 0111 360 B1 beschriebenen Wasserdampfdurchlässigkeiten sind jedoch nicht befriedigend, so daß ein Bedürfnis bestand, Folien zur Verfügung zu stellen, die hinsichtlich dieser Eigenschaft verbessert sind.

Nachteilig wirkt sich bei diesem Konzept der atmungsaktiven, aber wasserdichten Materialien aus, daß eine Erhöhung der Wasserdampfdurchlässigkeit, allgemein erreicht durch einen vergrößerten Anteil an Ethersegmenten an der Copolyetheresterrezeptur, mit einem verringerten Anteil an Estereinheiten verbunden ist, so daß sich die mechanischen Festigkeiten verringern.

Werden porenfreie Folien zu Abdichtung von porösen Flächengebilden eingesetzt, um diese durch Anlegen eines Druckgradienten an eine gegebene Form anzupassen,wie es beispieslweise zur Durchführung von Vakuum-Tiefziehvorgängen geschieht, so sind auch erhöhte Anforderungen an die mechanischen Festigkeiten und vor allem die Reißdehnung des Folienmaterials gegeben. Oftmals ist es notwendig, die Formgebung durch eine Nachtuhrung der Folie zu unterstützen, wobei die Folie nicht auf diesem Führungswerk blocken darf, so daß die Reibung zwischen Folie und Führung minimiert werden muß. Die Schwierigkeiten solcher Anwendungen sind beispielsweise von Ostertag in: Kunststoffe in technischen Wachstumsbranchen, SKZ-Fachtagung, Süddeutsches Kunststoffzentrum, Würzburg (1991) 109-126, beschrieben.

Im Rahmen der Weiterentwicklung bestehender technischer Foliensysteme bestand tur die vorliegende Erfindung die Aufgabe, eine porenfreie atmungsaktive Folie mit guten mechanischen Festigkeiten, hoher Reißdehnung und guter Verformbarkeit zu schaffen.

Ein weiteres Ziel dieser Erfindung ist es, eine Folienrezeptur zu schaffen, die sich leichter verarbeiten läßt und deren Rohstoffe preiswerter sind, so daß die angestrebte Folie damit auch wirtschaftlicher herstellbar ist. Trotz intensiver Bemühungen der Fachwelt, eine Folie mit einem solchen Leistungsspektrum bereitzustellen, wird eine derartige Folie bisher noch nicht angeboten.

Gelöst wird diese Aufgabe durch eine Folie der eingangs genannten Gattung, die dadurch gekennzeichnet ist, daß die Folie aus Copolyetherester-Elastomer zusätzlich ein thermoplastisch verarbeitbares, segmentiertes Polyurethanharz enthält in einer Menge von 5-40 Gew.-% bezogen auf das Gesamtgewicht von Copolyetherester und Polyurethanharz. Für die Fachwelt nicht naheliegend ist, daß eine derartige Folie eine Wasserdampfdurchlässigkeit von wenigstens 1.000 g/m²d, gemessen nach DIN 53122, bei 23°C und 85% relativer Luftfeuchtigkeit, besitzt.

Das Copolyetherester-Elastomer hat eine Shore D-Härte von 30-55, vorzugsweise von 40-50 und einen Schmelz-Flußindex von 10-20 g/10 min., gemessen bei 220°C und einer Belastung von 2,16 kg, nach ASTM D 1238.

Das thermoplastisch verarbeitbare, segmentierte Polyurethan besitzt eine Shore D-Härte zwischen 25 und 60, vorzugsweise 30 und 50, und einen Schmelzindex zwischen 5 und 30 g/10 min., gemessen bei 190°C und 8,7 kg Belastung.

Entgegen der allgemeinen Annahme liegen die Wasserdampfdurchlässigkeitswerte von Folien aus solchen Copolyetherester/Polyurethan-Mischungen nicht zwischen den Durchlässigkeitenwerten der jeweils eingesetzten reinen Rohstoffkomponenten, sondern übertreffen diese.

Dieser Effekt der erfindungsgemäßen Mischungen bleibt auch dann erhalten, wenn die für das Herstellverfahren aus der Schmelze notwendigen Additive und Verarbeitungshilfsmittel wie Gleitmittel oder Antiblockmittel zugesetzt werden.

Auch der Einsatz von Stabilisatoren oder Farbadditiven in üblichen Konzentrationen, wie sie zur Einstellung oder zum Erhalt der Gebrauchseigenschaften von Kunststoffen eingesetzt werden, bedingt keinen Abfall in den erfindungsgemäßen Eigenschaften. Durch die Verwendung der gegenüber dem teuren Copolyetherester preiswerteren Rohstoffkomponente aus thermoplastischen Polyurethan-Elastomer-Harzen läßt sich diese Folie zudem mit geringeren Rohstoffkosten und damit wirtschaftlicher produzieren.

Bei dem in der Copolyetherestermatrix enthaltenen Harz handelt es sich um ein hochmolekulares segmentiertes synthetisches Polyurethan-Harz mit einem Erweichungspunkt > 140°C, bestimmt durch Anhaftungsversuche auf der Koflerbank, das in einer Menge von 5 - 40 Gew.-%, vorzugsweise 10 - 20 Gew.-% (bezogen auf die Gesamtmasse der Folie), zugesetzt wird. Überraschenderweise wurde gefunden, daß sich durch die Einarbeitung eines thermoplastischen Elastomer-Harzes mit einem solchen Erweichungspunkt (> 140°C) in den Copolyetherester die Wasserdampfdurchlässigkeit und damit der atmungsaktive Charakter der Folie wesentlich verbessert, wobei gleichzeitig der Griff, die Hautfreundlichkeit und das mechanische Eigenschaftsbild der Folie günstig beeinflußt werden, die Folien sind leicht verformbar. Ebenso weisen die erfindungsgemäßen Folien eine hervorragende Trennbarkeit auf Zusätzlich lässt sich die Oberflächenspannung der erfindungsgemäßen Folien durch eine Coronavorbehandlung erhöhen, was vorteilhaft für die Haftungseigenschaften bei der Weiterverarbeitung ist. Außerdem hat sich gezeigt, daß sich die erfindungsgemäße Folie in bezug auf die Gleiteigenschaften besonders für die nachgeführte Vakuumformgebung eignet.

Die Folienoberfläche ist glatt genug, um nicht auf der Führung zu blocken. Andererseits weist die Folienoberfläche aber auch die notwendige Rauhigkeit auf, um ein Gleiten auf der Maschine und damit die Faltenbildung der Folie beim Kaschieren zu verhindern.

Um bestimmte Eigenschaften der erfindungsgemäßen Folie dauerhaft zu erhalten, kann diese geeignete Zusätze in jeweils wirksamen Mengen enthalten, vorzugsweise Hydrolysestabilisatoren und/oder Photostabilisatoren und/oder Antioxidantien.

Als Hydrolysestabilisatoren werden bevorzugt Carboiimide, im besonderen deren Ausführungen als nichtextrahierbare Polycarbodiimide aber auch Hydroxyethyl-Harnstoffe eingesetzt.

Als Antioxidantien werden sogenannte primäre Antioxidantien, durch Substitution am Stickstoff sterisch gehinderte sekundäre Amine, und/oder sterisch gehinderte Phenole aber auch sekundäre Antioxidantien, wie Thiother, Phosphite oder Phosphonite oder auch synergistische Mischungen primärer und sekundärer Antioxidantien genutzt.

Zur Photostabilisierung eignen sich Licht-absorbierende Substanzen, insbesondere kommen UV-Licht-absorbierende Benzoate und/oder Phenylsalicylate aber auch Benzotriazole und substituierte Acylate zum Einsatz. Als weitere Möglichkeit der Photostabilisierung bietet sich die Verwendung von Quenchern an, vorzugsweise Nickel-Organyl-Chelate und/oder Nickel-Dithiocarbamate.

Die für die hier angesprochenen Kunststoffe geeigneten Stabilisatorsysteme sind beispielsweise beschrieben bei Rek, Bravar: J. Elast. Plast. 12 (1980) 245.

Weitere Additive können bestimmte Eigenschaften der erfindungsgemäßen Folie in den jeweils wirksamen Mengen noch weiter verbessern. Hierzu zählen bevorzugt Gleit- und Antiblockmittel.

Als Gleitmittel werden bevorzugt Carbonsäureamide wie Erucasäureamide, Stearinsäureamide und Palmitinsäureamide oder Polydiorganylsiloxane aber auch Flourelastomere und anorganische Gleitmittel wie MoS₂ sowie aber auch Salze der Stearinsäure eingesetzt.

Geeignete Antiblockmittel sind beispielsweise mit der Folienmatrix unverträgliche organische Polymerisate oder anorganische Substanzen wie Silikate, Siliciumdioxid und Calciumcarbonat. Als besonders geeignete Antiblockmittel haben sich die anorganischen Substanzen, insbesondere Siliciumdioxid mit einer mittleren Teilchengröße von 1 - 10 µm erwiesen. Die Zusatzmenge dieser Antiblockmittel beträgt 0,5 - 6 Gew.-%, vorzugsweise 2 - 4 Gew.-%, bezogen auf das mittlere Foliengewicht.

Additive für Kunststoffe sind beispielsweise beschrieben in Gächter/Müller: Kunststoff-Additive, Carl Hanser Verlag München, 3. Ausgabe (1989).

Die Oberflächenhafteigenschaften werden durch eine der üblichen Vorbehandlungsmethoden vor dem Aufwickeln der Folie eingestellt, z.B. durch Flammbehandlung oder elektrische Coronavorbehandlung. Bei der Coronavorbehandlung, die nach einem der bekannten Verfahren durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung - üblicherweise Wechselspannung von etwa 10 kV mit einer Frequenz von 10 KHz - anliegt, daß Sprüh- oder Coronaentladungen stattfinden können. Durch diese Entladungen wird die Luft oberhalb der Folienoberfläche ionisiert, so daß es zu Reaktionen entlang der Folienoberfläche kommt, bei denen polare Einlagerungen in der wesentlich geringer polaren Polymermatrix entstehen. Die Behandlungsintensitäten liegen hierbei im üblichen Rahmen, wobei Behandlungsintensitäten bevorzugt sind, die Oberflächenspannungen von 38 - 46 mN/m ergeben.

Im folgenden wird die Erfindung anhand von Beispielen noch näher erläutert (Vergleich der Beispiele siehe Tab. 1).

### Beispiel 1

Es wurde auf einer Blasfolienextrusionsanlage eine opake Folie mit einer Gesamtdicke von 30 µm hergestellt. Die Folie bestand aus Copolyetherester-Elastomer mit Zusatz von 20 gew.-% Polyurethan, 0,6 Gew.-% Gleitmittel (Hoechstwachs C, Hoechst AG, Ffm, BRD). 0,08 Gew.-% Calciumstearat und 3,5 Gew.-% SiO₂, jeweils bezogen auf die Mischung der Komponenten.

Das handelsübliche Copolyetherester-Elastomer hatte eine Shore D Härte von 44, gemessen nach ASTM D 2240, und einen Schmelzflußindex von 15 g/10 min, gemessen nach ASTM D 1238 bei 220°C und einer Belastung von 2,16 kg. Das Copolyetherester-Elastomer bestand zu 60 Gew.-%, bezogen auf den Gesamtanteil des Copolyetherester-Elastomers, aus langkettigen Ethersegmenten mit einem Kohlenstoff/Sauerstoff-Verhältnis von 1,8 - 2,2 und zu 40 Gew.-% aus kurzkettigen Estereinheiten, deren Grundbaustein die Terephthalsäure bildet.

Das Polyurethan hatte eine Shore D Härte von 32 und einen Schmelzflußindex von 7 g/10 min bei 190°C und 8,7 kg Belastung. Es handelte sich hierbei um ein Polyesterurethan mit langkettigen Estereinheiten, deren Kohlenstoff/Sauerstoff Verhältnis 2,3 - 2,7 betrug. Die Urethaneinheiten werden aus einem aromatischen Diisocyanat und einem kurzkettigen aliphatischen Diol mit einem Kohlenstoff/Sauerstoff-Verhältnis von 2 gebildet.

### Beispiel 2

Es wurde eine Folie hergestellt wie in Beispiel 1, jedoch mit einem Polyurethan, dessen Shore D Härte 54 betrug und dessen Schmelzflußindex bei 16 g/10 min bei 190°C und 8,7 kg Belastung lag. Dieses Polyurethan wurde zum einen aus langkettigen Estereinheiten mit einem Kohlenstoff/Sauerstoff-Verhältnis von 2,3 - 2,7 gebildet. Die Urethaneinheiten wurden wiederum aus einem aromatischen Diissocyanat und einem kurzkettigen aliphatischen Diol mit einem Kohlenstoff/Sauerstoff-Verhältnis von 2 gebildet. Der Anteil des Polyurethans betrug ebenso 20 Gew.-%.

### Beispiel 3

Es wurde eine Folie hergestellt wie in Beispiel 1, jedoch mit einem Polyurethan, welches eine Shore D Härte von 42 und einen Schmelzflußindex von 19 g/ 10 min bei 190°C und 8,7 kg Belastung hatte. Dieses Polyurethan wurde aus langkettigen Ethereinheiten mit einem Kohlenstoff/Sauerstoff-Verhältnis von 3,8 - 4,5, aromatischen Diisocyanaten und einem aliphatischen Kettenverlängerer mit einem Kohlenstoff/Sauerstoff-Verhältnis von 2 gebildet. Der Anteil des Polyurethans betrug 20 Gew.-%.

### Beispiel 4

Es wurde eine Folie hergestellt wie in Beispiel 1 jedoch mit 10 Gew.-% Polyurethan (es wurde das gleiche Polyurethan wie in Beispiel 1 eingesetzt).

### Vergleichsbeispiel 1

Es wurde eine Folie hergestellt wie in Beispiel 1, jedoch ohne Zugabe des in Beispiel 1 verwendeten Polyurethans.

### Vergleichsbeispiel 2

Es wurde eine Folie hergestellt wie in Beispiel 1, jedoch ausschließlich aus Polyurethan mit Zusatz von 0,6 % Gleitmittel, 0,08 % Calciumstearat und 3,5 % SiO₂ jeweils bezogen auf die Mischung der Komponenten.

| | WDDU g/m² d | Reißfestigkeit N/mm² | | Weiterreißfestigkeit N/mm | | Reibungszahl | Schaumhaftung | Erweichungsbereich | Reißdehnung | | Spannung bei 50 % Dehnung N/mm² | |
|---|---|---|---|---|---|---|---|---|---|---|---|---|
| | DIN 53 122 | längs | quer | längs | quer | DIN 53375 | | °C | längs | quer | längs | quer |
| Bsp.1 | 1200 | 24 | 20 | 61 | 65 | 0,66 | ++ | 158-163 | 610 | 650 | 7,1 | 6,7 |
| Bsp.2 | 1010 | 23 | 21 | 65 | 68 | 0,70 | ++ | 161-165 | 590 | 620 | 7,3 | 6,8 |
| Bsp.3 | 1320 | 18 | 15 | 64 | 67 | 0,62 | ++ | 168-174 | 730 | 840 | 6,7 | 6,5 |
| Bsp.4 | 1270 | 25 | 22 | 68 | 73 | 0,54 | ++ | 169-174 | 660 | 690 | 8,3 | 7,6 |
| | | | | | | | | | | | | |
| Vergl. Bsp. 1 | 890 | 21 | 19 | 79 | 80 | 0,82 | + | 172-174 | 450 | 650 | 8,9 | 8,2 |
| Vergl. Bsp. 2 | 150 | 78 | 67 | 71 | 80 | 0,44 | ++ | 137-147 | 400 | 450 | 7,0 | 6,1 |

Aus Tabelle 1 ist eindeutig ersichtlich, daß die erfindungsgemäßen Folien den Vergleichsfolien hinsichtlich des gewünschten Eigenschaftsbildes überlegen sind.

### Bestimmung der Wasserdampfdurchlässigkeit

Die Wasserdampfdurchlässigkeit wird gemäß DIN 53122 bestimmt. Sie erfolgt bei einer Temperatur von 23°C und einer relativen Luftfeuchtigkeit von 85%.

### Bestimmung der Weiterreißfestigkeit

Die Bestimmung der Weiterreißfestigkeit erfolgt nach DIN 53515. Als Prüfkörper werden Winkelproben mit Einschnitt nach ISO 34, Methode B verwendet.

### Bestimmung der Reißfestigkeit und -dehnung sowie der Spannung bei 50 % Dehnung

Reißfestigkeit und -dehnung werden nach DIN 53544 ermittelt. Hierbei sind Prufstreifen mit einer Einspannlänge von 50 mm Länge zu verwenden. Die Spannung bei 50 % Dehnung ist ein Maß für die gute Verformbarkeit der Folie.

### Bestimmung der Reibungszahl

Die dimensionslose Reibungszahl wird nach DIN 53375 bestimmt. Sie wird im Kontakt Metall/Folie ermittelt.

### Bestimmung der Schaumhaftung

Die Schaumhaftung wird im Normalklima bestimmt. Die Folie wird in Kontakt mit einem Polyurethan-Reaktiv-Schaum gebracht. Nach dem Aushärten des Schaumes wird die Haftung durch Abziehen des Schaumes von der Folie nach den folgenden Kriterien bewertet:

| Beurteilung | Schadensbild |
|---|---|
| ++ = ausgezeichnet | (vollflächige Haftung des Polyurethan-Schaumes auf der Folie) |
| + = gut | (vereinzelte Randablösungen des Schaumes) |
| - = schlecht | (weitgehende Schaumablösung) |
| -- = sehr schlecht | (vollflächige Schaumablösung) |

### Bestimmung des Erweichungsbereiches

Der Erweichungsbereich wird auf der Kofler-Heizbank bestimmt. Hierzu wird ein 30 x 200 mm großes Folienstück auf die Kofler-Heizbank gelegt. Nach einer Wartezeit von 30 Sekunden wird dieses, ausgehend von dem Bereich niedrigerer Temperatur, abgezogen. Der Bereich in dem die Folie an der Oberfläche der Kofler-Heizbank haften bleibt, gibt den Erweichungsbereich an.

## Patentansprüche

1. Durch Extrusion hergestellte homogene, wasserdichte und atmungsaktive Folie, dadurch gekennzeichnet, daß die Folie aus mindestens zwei unterschiedlichen thermoplastischen Elastomerharzkomponenten und gegebenenfalls Additiven besteht, wobei eine der beiden Elastomerharzkomponenten ein Copolyetherester-Elastomer mit einer Shore D-Härte von 30 - 55 und einem Schmelzflußindex von 10 - 20 g/10 min (220°C, Belastung 2,16 kg nach ASTM D 1238) ist und die zweite Komponente ein thermoplastisch verarbeitbares, segmentiertes Polyurethan-Elastomer mit einer Shore D-Härte von 25-60, einem Schmelzindex von 5-30 g/10 min (190°C, Belastung 8,7 Kg) und einem Erweichungspunkt > 140°C ist, und wobei die Copolyetherester-Elastomer-Komponente einen Anteil von 60 - 95 Gew.-%, bevorzugt 80 - 90 Gew.-%, und die thermoplastische Polyurethanharz-Komponente einen Anteil von 5 - 40 Gew.-%, bevorzugt 10 - 20 Gew.-%, bezogen auf die Gesamtmischung der eingesetzten Komponenten hat.

2. Folie nach Anspruch 1, dadurch gekennzeichnet, daß die Folie ausgestattet ist mit einem Anteil von 0,3 - 1 Gew.% Gleitmittel und Wachsen, in einer bevorzugten Ausführung von 0,5 - 0,7 Gew.-%, jeweils bezogen auf die Gesamtmischung.

3. Folie nach den Ansprüchen 1 und 2, dadurch gekennzeichnet, daß die Folie ausgestattet ist mit einem Anteil von 2 - 5 Gew.-%, in einer bevorzugten Ausführung 3 - 4 Gew.%, eines anorganischen Füllstoffes, jeweils bezogen auf die Gesamtmischung.

4. Folie nach den Ansprüchen 1, 2 oder 3, dadurch gekennzeichnet, daß die Folie eine Dicke zwischen 15 und 100 µm, in einer bevorzugten Ausführung zwischen 30 und 50 µm besitzt.

5. Verwendung einer Folie gemäß den Ansprüchen 1 - 4 als klimaaktive Dichtbahn gegenüber fluiden Medien.

6. Verwendung gemäß Anspruch 5 als Abdeckbahn für textile Flächengebilde.

7. Verwendung gemäß Anspruch5 5 als Dicht- und Abdeckbahn bei der Vakuumformgebung für die anschließende Ausformung mit Reaktiv-Schaumsystemen.

8. Verwendung gemäß Anspruch 5 bei der Herstellung anatomisch geformter Teile, insbesonders zur Ausformung von Sitzelementen.

9. Verwendung gemäß Anspruch 5 zur Abtrennung von stofflichen Komponenten, die bevorzugt in Zusammenhang mit der Bildung von Wasserdampf auftreten, in einer bevorzugten Ausführung zur Reinigung von Verbrennungs-Abgasen.

## Claims

1. A homogeneous, waterproof and breathable film prepared by extrusion, characterised in that the film consists of at least two different thermoplastic elastomeric resin components and optionally additives, one of the two elastomeric resin components being a copolyetherester elastomer having a Shore D hardness of from 30 to 55 and a melt flow index of from 10 to 20 g/10 min (220°C, load 2.16 kg in accordance with ASTM D 1238) and the second component being a thermoplastically processable, segmented polyurethane elastomer having a Shore D hardness of from 25 to 60, a melt flow index of 5.30 g/10 min (190°C, load 8.7 kg) and a softening point of > 140°C, and wherein the proportion of the copolyetherester elastomer component is from 60 to 95 wt.%, preferably from 80 to 90 wt.%, and the proportion of the thermoplastic polyurethane resin component is from 5 to 40 wt.%, preferably from 10 to 20 wt.%, based on the total mixture of the components used.

2. A film according to claim 1, characterised in that the film is provided with a proportion of from 0.3 to 1 wt.% and, in a preferred embodiment, from 0.5 to 0.7 wt.% of lubricant and waxes, in each case based on the total mixture.

3. A film according to claims 1 and 2, characterised in that the film is provided with a proportion of from 2 to 5 wt.% and, in a preferred embodiment, from 3 to 4 wt.% of an inorganic filler, in each case based on the total mixture.

4. A film according to claims 1, 2 or 3, characterised in that the film has a thickness of between 15 and 100 µm and, in a preferred embodiment, between 30 and 50 µm.

5. The use of a film according to claims 1 to 4 as a weather-resistant damp-proof sheet against fluid media.

6. The use according to claim 5 as a covering sheet for textile fabrics.

7. The use according to claim 5 as a damp-proof sheet and covering sheet in the vacuum forming for the subsequent shaping using reactive foam systems.

8. The use according to claim 5 in the preparation of anatomically shaped parts, in particular for the shaping of seating units.

9. The use according to claim 5 for the separation of material components preferably occurring in connection with the formation of water vapour and, in a preferred embodiment, for the purification of furnace gases.

## Revendications

1. Feuille homogène, préparée par extrusion, imperméable à l'eau mais perméable aux gaz ("qui respire"), caractérisée en ce qu'elle consiste en au moins deux composants résineux élastomères thermoplastiques différents et le cas échéant des additifs, l'un des deux composants résineux élastomères consistant en un élastomère de copolyétherester ayant une dureté Shore D de 30 à 55 et un indice de fluidité à l'état fondu de 10 à 20 g/10 min (à 220°C sous une charge de 2,16 kg selon norme ASTM D 1238) et le deuxième composant consistant en un élastomère de polyuréthanne segmenté apte au travail thermoplastique, ayant une dureté Shore D de 25 à 60, un indice de fluidité à l'état fondu de 5 à 30 g/10 min (à 190°C sous une charge de 8,7 kg) et un point de ramollissement supérieur à 140°C, le composant élastomère de copolyétherester représentant de 60 à 95 %, de préférence de 80 à 90 % en poids, et le composant résine de polyuréthanne thermoplastique représentant de 5 à 40 % en poids, de préférence de 10 à 20 % en poids, par rapport au mélange total des composants mis en oeuvre.

2. Feuille selon la revendication 1, caractérisée en ce qu'elle contient de 0,3 à 1 % en poids d'agents lubrifiants et cires, de préférence de 0,5 à 0,7 % en poids, par rapport au mélange total.

3. Feuille selon les revendications 1 et 2, caractérisée en ce qu'elle contient de 2 à 5 % en poids, de préférence de 3 à 4 % en poids d'une matière de charge minérale, par rapport au mélange total.

4. Feuille selon les revendications 1, 2 ou 3, caractérisée en ce qu'elle a une épaisseur de 15 à 100 µm, de préférence de 30 à 50 µm.

5. Utilisation d'une feuille selon les revendications 1 à 4, en tant que barrière d'étanchéité à l'égard des milieux fluides, mais active à l'égard des influences climatiques.

6. Utilisation selon la revendication 5, en tant que pièce de recouvrement pour des articles textiles planiformes.

7. Utilisation selon la revendication 5, en tant que feuille d'étanchéité et de recouvrement au façonnage sous vide pour le façonnage subséquent avec des mousses réactives.

8. Utilisation selon la revendication 5, pour la fabrication de pièces à conformation anatomique, en particulier pour le formage d'éléments de sièges.

9. Utilisation selon la revendication 5, pour la séparation de composants, formés de préférence à la production de vapeur d'eau, et dans un mode de réalisation préféré pour l'épuration de gaz de combustion.
